# EUROPÄISCHE PATENTANMELDUNG

(11) **EP 0 909 938 A2**
(43) Veröffentlichungstag der Anmeldung: **21.04.1999**
(21) Anmeldenummer: 98116487.4
(22) Anmeldetag: 01.09.1998
(51) Int. Cl.: G01B 11/02

(54) **Verfahren zur optischen Kontrolle eines mechanischen Befestigungselements**

(30) Priorität: 16.10.1997 DE 19745728
(71) Anmelder: Bayerische Motoren Werke Aktiengesellschaft, 80788 München (DE)
(72) Erfinder: Niedenzu, Peter, 81547 München (DE); Donath, Norbert, 82343 Poecking (DE)

(57) **Zusammenfassung**

Bei einem Verfahren zur optischen Kontrolle eines mechanischen Befestigungselements mittels einer auf eine Abschlußfläche des Elements gerichteten Bilderkennungseinrichtung mit nachgeschalteter Bildverarbeitungseinrichtung besitzt das Element in der Abschlußfläche eine optische Eigenschaft, die einem charakteristischen Parameter zugeordnet ist und die mit der Bilderkennungseinrichtung erfaßt und in der Bildverarbeitungseinrichtung durch Vergleich mit vorgegebenen Sollbildern für die unterschiedlichen Eigenschaften identifiziert wird.

## Beschreibung

Die Erfindung bezieht sich auf ein Verfahren mit den Merkmalen des Oberbegriffs von Patentanspruch 1, wie es beispielsweise aus der US 5,150,623 A bekannt ist. Bei den bekannten Verfahren werden die Abmessungen und die Toleranzen der Abschlußfläche des Befestigungselements selbst überprüft. Das Befestigungselement ist ein Bolzen, ein Niet usw. Es kann sich dabei auch um eine Schraube, einen Nagel oder dgl. handeln.

Mit den bekannten Verfahren ist es nicht möglich, einen charakteristischen Parameter des Befestigungselements außer der Abmessung der Abschlußfläche selbst zu erkennen. Es ist also beispielsweise nicht möglich, das Material oder aber auch die Länge oder den Durchmesser oder weitere Eigenschaften, wie beispielsweise die Gewindesteigung im Falle einer Schraube, zu erkennen. Gerade im industriellen Fertigungsbereich ist aber die Notwendigkeit hierfür als Qualitätsnachweis besonders ausgeprägt. Bisher ist es hierzu lediglich bekannt, die charakteristischen Parameter anhand des in die Wirkstellung verbrachten Befestigungselements, d. h. nachträglich zu überprüfen. Im Falle eines Niets ist es hierzu beispielsweise erforderlich, die Nietverbindung zu zerstören.

Der Erfindung liegt die Aufgabe zugrunde, ein Verfahren der eingangs genannten Art zu schaffen, mit dem es auf einfache Weise möglich ist, den oder die interessierenden charakteristischen Parameter des Befestigungselements zu identifizieren.

Die Erfindung löst diese Aufgabe durch die Merkmale des Patentanspruchs 1.

Durch die optischen Eigenschaften der Abschlußfläche selbst wird nunmehr ein Rückschluß auf den interessierenden Parameter möglich. Bei den Eigenschaften kann es sich beispielsweise um eine charakteristische Farbe handeln, mit der der Parameter, beispielsweise der Härtegrad, identifizierbar wird.

Eine deutliche Vereinfachung des Herstellungsverfahren für das Befestigungselement selbst wird möglich, wenn die Eigenschaft durch eine in der Abschlußfläche gegebene Oberflächenanomalie erkennbar wird. Dabei kann es sich beispielsweise um eine Markierung, beispielsweise einen Buchstaben oder eine in sonstiger Weise in der Oberfläche hervortretende Flächenanomalie oder einen Codeschlüssel handeln.

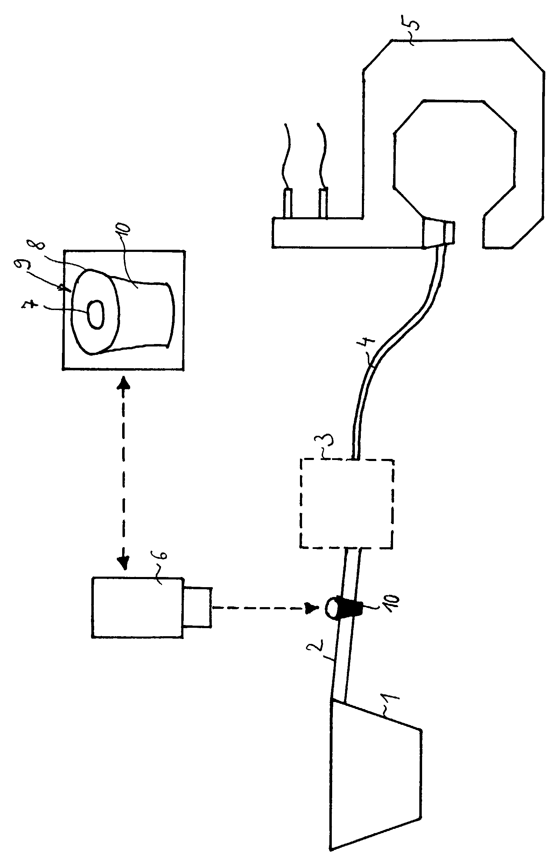

Das erfindungsgemäße Verfahren ist anhand der Zeichnung weiter erläutert.

In der einzigen Figur ist schematisch als Beispiel eine Stanznietanlage dargestellt, bei der das Material der verwendeten Stanznieten mit Hilfe des erfindungsgemäßen Verfahrens erkennbar ist.

Die Stanznietanlage besteht im wesentlichen aus einem Behälter 1 für Stanznieten 10, bei dem es sich beispielsweise um einen Rütteltopf handelt. Über eine Schiene 2 zur Nietführung und ein Zuschießsystem 3 mit nachgeordnetem Schlauch 4 als Nietzuführung werden die Stanznieten einem Hydraulik-Setzwerkzeug 5 zugeführt, durch das sie in zwei aufeinanderliegende Stanzbleche (nicht dargestellt) eingefügt werden.

Erfindungsgemäß ist eine Kamera 6 auf die Schiene 2 ausgerichtet. Das damit gewonnene Ist-Bild des Kopfes der jeweiligen Stanzniet wird mit Soll-Bildern in einer Bildverarbeitungseinrichtung (nicht dargestellt) verglichen. Jeder Stanzniet enthält in seiner Abschlußfläche beispielsweise eine ringförmige Markierung 7, deren Durchmesser für den Härtegrad des Stanzniets repräsentativ ist. Bei großer Härte besitzt die Markierung 7 beispielsweise einen großen, fast bis an den Rand 8 des Kopfes 9 reichenden Durchmesser, während bei kleiner Härte der Durchmesser der Markerung 7 wesentlich kleiner ist und beispielsweise als Kreis mit einem Durchmesser von einem Zehntel des Kopfdurchmessers ausgebildet ist.

In der Bildverarbeitungseinrichtung befinden sich Soll-Bilder für die möglichen Formen der Markierung 7. Durch Vergleich des Ist-Bildes mit den Soll-Bildern wird das jeweils vorliegende Soll-Bild identifiziert und daraus auf den tatsächlichen Wert des charakteristischen Parameters geschlossen. Dadurch kann bereits vor Einsetzen des Befestigungselements erkannt werden, ob das Befestigungselement die erforderlichen richtigen charakteristischen Parameter aufweist.

Anstelle eines Parameters können auch mehrere Parameter durch die Anordnung bzw. Ausgestaltung der Markierung 7 im Kopf 9 charakterisiert und damit identifiziert werden.

## Patentansprüche

1. Verfahren zur optischen Kontrolle eines mechanischen Befestigungselements mittels einer auf eine Abschlußfläche des Elements gerichteten Bilderkennungseinrichtung mit nachgeschalteter Bildverarbeitungseinrichtung, dadurch gekennzeichnet, daß das Element in der Abschlußfläche (9) eine optische Eigenschaft besitzt, die einem charakteristischen Parameter zugeordnet ist und die mit der Bilderkennungseinrichtung (6) erfaßt und in der Bildverarbeitungseinrichtung durch Vergleich mit vorgegebenen Sollbildern für die unterschiedlichen Eigenschaffen identifiziert wird.

2. Verfahren nach Anspruch 1, **dadurch gekennzeichnet**, daß die Eigenschaft eine in der Abschlußfläche (9) gegebene Oberflächenanomalie ist.

3. Verfahren nach Anspruch 2, **dadurch gekennzeichnet**, daß die Eigenschaft eine Markierung (7) ist.
